# EUROPEAN PATENT APPLICATION

(11) **EP 2 775 182 A1**
(43) Date of publication of application: **10.09.2014**
(21) Application number: 14154480.9
(22) Date of filing: 10.02.2014
(51) Int. Cl.: F16K 37/00

(54) **Solenoid valve control device**

(30) Priority: 05.03.2013 JP 2013043060
(71) Applicant: Fujikoki Corporation, Tokyo 158-0082 (JP)
(72) Inventor: Ogawa, Yoshio, Setagaya-ku, Tokyo 158-0082 (JP)
(74) Representative: Schweiger, Martin

(57) **Abstract**

[Problems to be solved]

To provide a solenoid valve control device in which a user, or the like, can preciously grasp a state of the solenoid valve based on the number of operations of the solenoid valve.

[Solution]

The solenoid valve control device 13 controls the solenoid valve 12 and includes a storage unit 136 storing the number of operations concerning opening/closing of the solenoid valve 12, and a transmission unit 132 externally transmitting the number of operations stored in the storage unit 136. When the number of operations stored in the storage unit 136 becomes equal to or greater than the limitation number of times concerning a life of the solenoid valve 12, the transmission unit 132 externally transmits an alarm signal.

## Description

### BACKGROUND OF THE INVENTION

### Field of the Invention

The present invention relates to a solenoid valve control device, for example, a control device of a solenoid valve used in an air conditioning system for vehicles.

### Description of the Conventional Art

For example, in an air conditioning system for vehicles having a front air conditioner and a rear air conditioner, a solenoid valve controlling a flow of a refrigerant to the front air conditioner and a solenoid valve controlling a flow of a refrigerant to the rear air conditioner are used. Generally, when the front air conditioner is used, the solenoid valve for the front air conditioner opens to pass the refrigerant to the front air conditioner. When the front air conditioner is not used, the solenoid valve for the front air conditioner closes to stop the flow of the refrigerant to the front air conditioner. Further, when the rear air conditioner is used, the solenoid valve for the rear air conditioner opens to pass the refrigerant to the rear air conditioner. When the rear air conditioner is not used, the solenoid valve for the rear air conditioner closes to stop the flow of the refrigerant to the rear air conditioner (for example, Japanese Patent Application Laid-Open, No. 7-117455).

Further, in the solenoid valve used in the above air conditioning system, there are two types, which are a normal open type and a normal close type. The solenoid valve of the normal open type opens in a de-energized state and closes by operating the valve when in an energized state. On the other hand, the solenoid valve of the normal close type closes in a de-energized state and opens by operating the valve when in an energized state.

By the way, the above solenoid valve has a life of durability since it is a mechanical part, so that limitation of number of operations, for example, 100,000 times, is provided.

Therefore, for example, when the solenoid valve of the normal close type is used in an air conditioning system of vehicles is used and overs the limitation of number of times (for example, 100,000 times) concerning the life of number of operations of the solenoid valve before a guarantee period of the vehicle has expired, some problems generate. For examples, even when energizing the solenoid valve, the valve does not open and stays in a closed state, so that the valve cannot perform air conditioning in the vehicle. Even when de-energizing, the valve does not close and stays in an opening state, so that the valve cannot stop the flow of the refrigerant. Further, when the solenoid valve of the normal open type is used in the air conditioning system of vehicles and overs the limitation of number of times (for example, 100,000 times) concerning the life of number of operations of the solenoid valve before the guarantee period of the vehicle has expired, some problems generate. For example, even when energizing the solenoid valve, the valve does not close and stays in the opening state, so that the valve cannot stop the flow of the refrigerant. Even when de-energizing, the solenoid valve does not open and stays in the closing state, so that the valve cannot perform air conditioning in the vehicle.

For solving these problems, Japanese Patent No. 4431996 disclosed a technology improving the reliability to the use limitation period (life) of a solenoid valve.

A drive circuit of the solenoid valve disclosed in Japanese Patent No. 4431996 includes a solenoid valve operation detection unit, a detection result storage unit, and a cumulative number of operations determination unit. The solenoid valve operation detection unit detects that the solenoid valve is in an operation, based on a current detection value. The detection result storage unit stores a detection result detected by the solenoid valve operation detection unit. The cumulative number of operations determination unit calculates a cumulative number of operations of the solenoid valve from each detection result stored in the detection result storage unit and determines whether the cumulative number of operations overs the predetermined first number of operations. When the cumulative number of operations determination unit determines that the cumulative number of operations overs the first number of operations, the cumulative number of operations determination unit outputs a pulse width change signal which instructs to change a pulse width of a first pulse signal. When the cumulative number of operations determination unit determines that the cumulative number of operations overs a second number of operations, which is set to be greater than the first number of operations, the cumulative number of operations determination unit externally outputs a use time limitation notification signal which notifies that the solenoid valve reaches a time limitation of use.

### SUMMARY OF THE INVENTION

### Problems to be solved by the invention

According to the drive circuit of the solenoid valve disclosed in Japanese Patent No. 4431996, when the cumulative number of operations determination unit determines that the cumulative number of operations overs the predetermined cumulative number of operations, the cumulative number of operations determination unit externally outputs the use time limitation notification signal notifying that the solenoid valve reaches the time limitation of use. A user, or the like, can promptly replace the solenoid valve, which reaches the time limitation of use (life) by receiving the information.

However, according to the drive circuit of the solenoid valve disclosed in Japanese Patent No. 4431996, there is a problem that a user, or the like, cannot grasp a state of the solenoid valve (for example, cumulative number of operations) until the solenoid valve reaches the time limitation of use. For example, when a solenoid valve is used for an air conditioning system for vehicles, the vehicle mounting the solenoid valve is used in various environments. Thus, the time limitation of use (life) of the solenoid valve variously changes according to these environments, so that the user, or the like, needs to replace the solenoid valves any number of operations according to these environments. However, in the above drive circuit of the solenoid valve, there is a problem that the user, or the like, cannot preciously grasp the state of the solenoid coil (for example, the cumulative number of operations) at a desired time, and cannot replace the solenoid valve in appropriate number of operations corresponding to the environments.

The present invention was conceived in view of above problems, and is directed to provide a solenoid valve control device, in which a user, or the like, can preciously grasps the state of the solenoid valve based on the number of operations.

### Means to solve the problems

For solving the above problem, a solenoid valve control device according to the present invention is a solenoid valve control device controlling a solenoid valve, and includes a storage unit storing the number of operations concerning opening/closing of the solenoid valve and a transmission unit externally transmitting the number of operations stored in the storage unit.

In a preferable embodiment, when the number of operations stored in the storage unit overs the limitation number of times concerning the life of the solenoid valve, the transmission unit externally outputs an alarm signal. Further, in a preferable embodiment, the limitation number of times is the number of operations acceptable on durability of the solenoid valve. Further, in a preferable embodiment, the number of operations is any one of the number of times of opening, the number of times of closing, and the number of times of energizing of the solenoid valve. Further, in a preferable embodiment, the transmission unit externally transmits by a local interconnect network (LIN) communication or a controller area network (CAN) communication. Further, in a preferable embodiment, the storage unit is a non-volatile memory.

### Effect of the Invention

According to the solenoid valve of the present invention, the transmission unit externally transmits the number of operations concerning the solenoid valve, and thereby the user, or the like, can preciously grasp the number of operations of opening/closing of the solenoid valve at a desired time. Further, when the number of operations stored in the storage unit becomes equal to or greater than the limitation number of times concerning the life of the solenoid valve, parkicularly, equal to or greater than the number of operations acceptable on durability of the solenoid valve, the transmission unit externally transmits the alarm signal. By this operation, the user can reliably grasp that the solenoid valve is at the time of replacement. Further, since the number of operations is any one of the number of times of opening, number of times of closing, and number of times of energizing of the valve, the user can preciously grasp the number of operations concerning the opening/closing of the solenoid valve. Further, since the transmission unit externally communicates by the LIN communication or the CAN communication which are conventionally used in vehicles, or the like, the solenoid valve control device is simply applicable to the air conditioning system for vehicles (car air conditioner) without building a new communication network. Further, since the storage unit is a non-volatile memory, the solenoid valve control device can reliably store the number of operations of the solenoid valve in the storage unit, even when the solenoid valve control device operates in a sleep mode reducing power consumption, or power supply of the solenoid valve control device is stopped.

### BRIEF EXPLANATION OF DRAWINGS

Fig. 1 is an overall block diagram explaining a refrigeration cycle of an air conditioning system in which a solenoid valve control device according to the present invention is adapted.
Fig. 2 is an internal block diagram illustrating an internal constitution of the solenoid valve device illustrated in Fig. 1.
Fig. 3 is a view illustrating an example of a control signal outputting from a microcomputer in the solenoid valve control device illustrated in Fig. 2, by showing time series.
Fig. 4 is a flow chart explaining a flow of processing of the microcomputer in the solenoid valve control device illustrated in Fig. 2.
Fig. 5 is a view illustrating an example of a transmission buffer resister.

### DETAILED DESCRIPTION OF PREFERRED EMBODIMENT

The exemplary embodiment of the solenoid valve control device according to the present invention will be described, referring to drawings as follows.

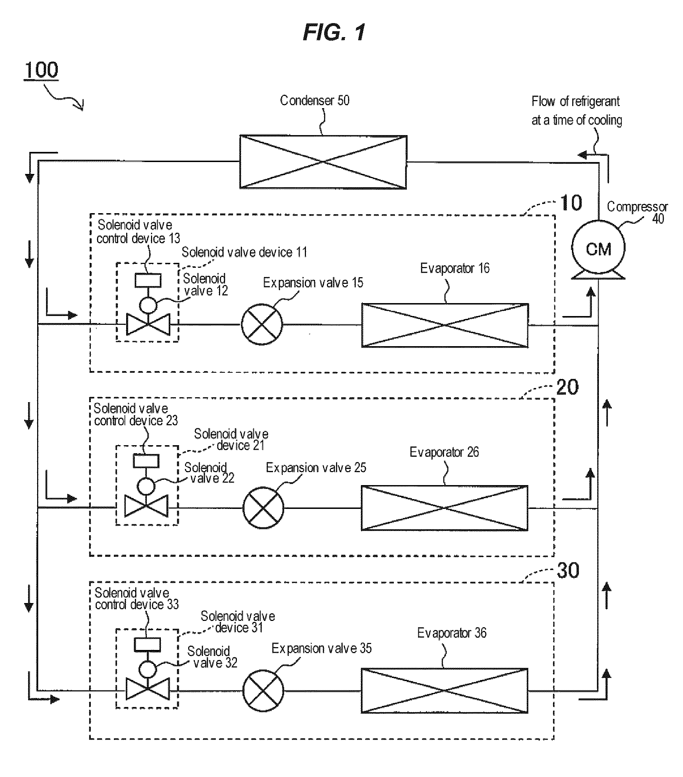

Fig. 1 explains a refrigeration cycle of the air conditioning system in which a solenoid valve control device according to the present invention is adapted. For example, Fig. 1 explains a cooling cycle of the air conditioning system for an electric vehicle mounting a battery. In addition, an arrow in Fig. 1 indicates a flow direction of refrigeration at a time of cooling.

The air conditioning system 100 illustrated in Fig. 1 (for example, a car air conditioner) includes a front air conditioner 10, a rear air conditioner 20, a battery air conditioner, a compressor 40, and a condenser 50. These equipment are connected each other by piping and a refrigeration circulates in them, so that the refrigeration cycle is constituted.

The front air conditioner 10 is used, for example, for air conditioning of the front seats in a vehicle interior and includes a solenoid valve device 11, an expansion valve 15, and an evaporator 16. Further, the solenoid valve device 11 has a structure in which a solenoid valve control device 13 for controlling the opening/closing of a solenoid valve 12 is integrally attached to the solenoid valve 12.

Further, the rear air conditioner 20 is used, for example, for air conditioning of the rear seats in the vehicle interior and includes a solenoid valve device 21, an expansion valve 25, and an evaporator 26. Further, the solenoid valve device 21 has a structure in which a solenoid valve control device 23 for controlling the opening/closing of a solenoid valve 22 is integrally attached to the solenoid valve 22.

Further, the battery air conditioner 30 is used, for example, for cooling a battery mounted in a vehicle and includes a solenoid valve device 31, an expansion valve 35, and an evaporator 36. Further, the solenoid valve device 31 has a structure in which a solenoid valve control device 33 for controlling the opening/closing of a solenoid valve 32 is integrally attached to the solenoid valve 32.

For example, by opening the solenoid valve 12 by the solenoid valve control device 13 in the solenoid valve device 11 in the front air conditioner 10, the refrigerant flows to the evaporator 16 through the solenoid valve 12 and the expansion valve 15, so that the front seats in the vehicle interior can be cooled. Further, by opening the solenoid valve 22 by the solenoid valve control device 23 in the solenoid valve device 21 in the rear air conditioner 20, the refrigerant flows to the evaporator 26 through the solenoid valve 22 and the expansion valve 25, so that the rear seats in the vehicle interior can be cooled. Furthermore, by opening the solenoid valve 22 by the solenoid valve control device 23 in the solenoid valve device 31 in the battery air conditioner 30, the refrigerant flows to the evaporator 36 through the solenoid valve 32 and the expansion valve 35, so that the battery mounted in the vehicle can be cooled.

On the other hand, when the solenoid valve control device 33 in the solenoid valve device 31 in the battery air conditioner closes the solenoid valve 32, the flow of the refrigerant flowing to the evaporator 36 through the solenoid valve 32 and the expansion valve 35 is blocked. Thus, for example, when the cooling of the battery mounted in the vehicle is not necessary, it is possible not to perform the cooling of the battery in the air conditioning system 100. Further, when the solenoid valve control device 13 in the solenoid valve device 11 in the front air conditioner 10 closes the solenoid valve 12 and the solenoid valve control device 23 in the solenoid valve device 21 in the rear air conditioner 20 closes the solenoid valve 22, the following flows of the refrigerant are blocked. That is, the flow of the refrigerant flowing to evaporator 16 through the solenoid valve 12 and the expansion valve 15 is blocked by closing the valve 12, and the flow of the refrigerant flowing to the evaporator 26 through the solenoid valve 22 and the expansion valve 25 is blocked by closing the solenoid valve 22. Thus, for example, when a rider stops a vehicle and leaves from the vehicle to perform only charge, it is possible not to perform the air conditioning of the front seats and the rear seats.

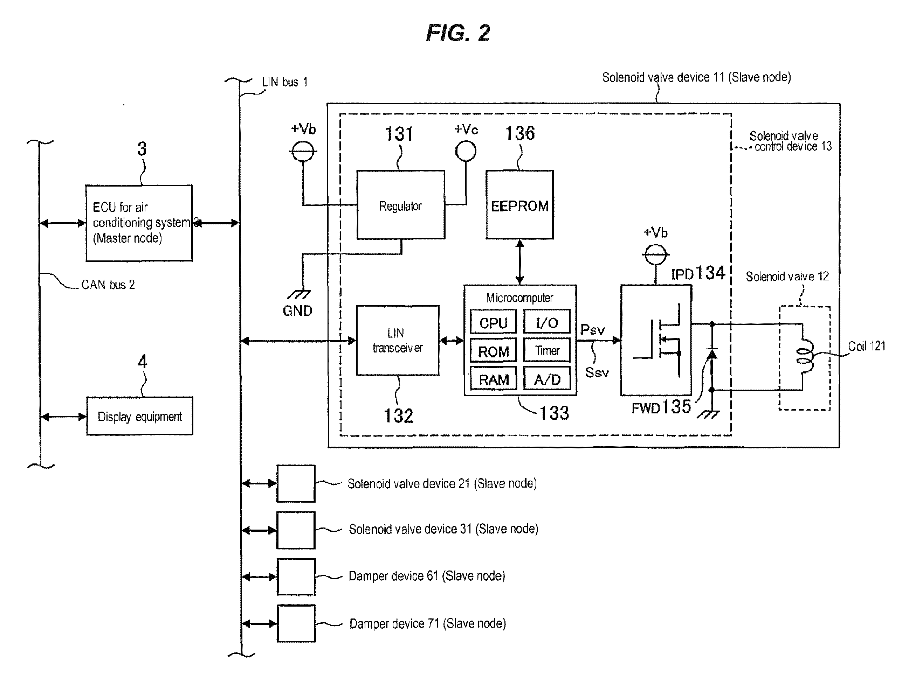

Fig. 2 illustrates an internal constitution of the solenoid valve device, particularly, the internal constitution of the solenoid valve device 11 in the front air conditioner 10. In addition, the solenoid valve device 21 in the rear air conditioner 20 and the solenoid valve device 31 in the battery air conditioner 30 have same constitutions, so that the detailed explanation is omitted.

The solenoid valve control device 13 in the solenoid valve device 11 is constituted by, for example, an electronic circuit board in which electronic components are soldered on a print board. The electronic circuit board is fixed to a resin case by screws, or the like, and the case is fixed to metal fittings attached to a coil 121 in the solenoid valve 12 by screws, or the like. Thus, the solenoid valve control device 13 is integrally fixed to the solenoid valve 12. Further, the coil 121 in the solenoid valve 12 connects lead wires and the lead wires directly connect the print board in the solenoid valve control device 13 by, for example, soldering, or the like.

Further, the solenoid valve control device 13 in the solenoid valve device 11 connects a battery power supply (+Vb, GND), and also connects a LIN (Local Interconnect Network) bus 1 (or CAN (Controller Area Network) bus). The LIN is, for example, a vehicle LAN (Local Area Network) used in communication in the vehicle such as an automobile, or the like. The solenoid valve control device 13 in the solenoid valve device 11 operates as a slave node. The solenoid valve control device 13 periodically receives instructions such as signals indicating opening and closing of the solenoid valve 12 via LIN communication signals (CAN communication signals in a case of CAN bus) and controls opening and closing of the solenoid valve 12. The LIN communication signals are transmitted from an ECU (Electronic Control Unit) for the air conditioning system 3 (for example, a car air conditioner) which operates as a master node.

Here, the signal instructing opening and closing of the solenoid valve 12, which is received by the solenoid valve control device 13, is acceptable either a signal directly representing the opening and closing of the solenoid valve 12 or, for example, a signal representing energizing and de-energizing. When the solenoid valve control device 13 receives the signal representing the energizing, for example, if the solenoid valve 12 is a normal open type, the solenoid valve 12 closes. If the solenoid valve 12 is a normal close type, the solenoid valve 12 opens. On the other hand, when the solenoid valve control device 13 receives the signal representing the de-energizing, if the solenoid valve 12 is a normal open type, the solenoid valve 12 opens. If the solenoid valve 12 is a normal close type, the solenoid valve 12 closes.

In addition, the air conditioning system 100 has, for example, damper devices 61 and 71 adjusting an air volume, other than the solenoid valves 11, 12, 13, and the like. On the LIN bus 1 in which the solenoid valve device 11 is connected, the solenoid valve device 21 and the solenoid device 31 which operate as a slave node used in the air conditioning system, the damper devices 61 and 71, and the like, are connected. Further, the ECU for air conditioning system 3 (for example, a car air conditioner), which operates as a master node, is connected to CAN bus 2 which is used as communication in the vehicle. The ECU for air conditioning system 3 can communicate with other ECU not illustrated, testing equipment, and a display device 4 such as a navigation screen, a control panel, or the like, of the vehicle. The testing equipment connects the vehicle at a time of maintenance service.

The solenoid valve control device 13 mainly includes a regulator 131, a LIN transceiver 132, a microcomputer 133, an IPD (Intelligent Power Device) 134, a FWD (Free Wheeling Diode) 135, and an EEPROM (Electrically Erasable Programmable Read-Only Memory) 136.

The regulator 131 generates a power supply +Vc (for example, +5 Vdc) used in an internal circuit of the solenoid valve control device 13 from a power supply +Vb (for example, +12 Vdc) of the battery of the vehicle connected to the solenoid valve control device 13.

The LIN transceiver (transmitting and receiving unit) 132 is connected to LIN bus 1 and converts a voltage level of the LIN bus 1 to a voltage level of the internal circuit in the solenoid valve control device 13. The LIN transceiver 132 can make, for example, to perform LIN communication between the ECU for air conditioning system 3 and the microcomputer 133.

The microcomputer 133 is connected to the LIN transceiver 132 and has ROM, CPU, RAM, an I/O circuit, a timer, a A/D convertor, and the like. The ROM stores programs, or the like, controlling the opening and closing of the solenoid valve 12 based on the LIN communication signal transmitted from the ECU for air conditioning system 3 via the LIN bus 1. The CPU performs execution processing of the programs stored in the ROM and calculation processing of the number of operations of the solenoid valve 12, or the like. The RAM temporally stores the number of operations of the solenoid valve 12, or the like, calculated in the CPU. The I/O circuit performs input/output processing with the peripheral circuits containing an output port Psv outputting a control signal Ssv of the solenoid valve 12. The timer measures times. The A/D convertor converts an analog voltage to a digital value.

The IPD 134 connects the output port Pvs of the microcomputer 133 and contains, for example, a switching element such as MOSFET (Metal Oxide Semiconductor Field Effect Transistor), or the like. The IPD 134 controls an energized state of the battery voltage applying to the solenoid valve 12 based on the control signal Ssv of the solenoid valve 12 output from the output port Psv in the microcomputer 133.

The FWD 135 connects the coil 121 of the solenoid valve 12 in parallel, and refluxes the load current, for example, when MOSFET is OFF.

The EEPROM (storage unit) 136, which is a non-volatile memory, connects the microcomputer 133 and stores data of the number of operations, or the like, which is necessary to retain when the power supply of the battery is disconnected, in the data stored in the microcomputer 133.

In addition, the regulator 131, the LIN transceiver 132, the microcomputer 133, the IPD 134, the FWD 135, and the EEPROM 136 may be constituted independently each other, and an IC chip, in which two or more of them are integrated, may be used to reduce the size of the solenoid valve control device 13.

Then, the control processing of the solenoid valve 12 by the solenoid valve control device 13 will be outlined. At first, the ECU for air conditioning system 3 transmits a signal indicating the opening and closing or energizing and de-energizing of the solenoid valve 12 to the solenoid valve control device 13 by the LIN communication signal via the LIN bus 1. The operation is performed base on a condition of the vehicle or a switch operation by a driver.

The solenoid valve control device 13 receives the LIN communication signal transmitted from the ECU for air conditioning system 3 by the LIN transceiver 132. The LIN transceiver 132 converts the voltage level of the LIN communication signal to the voltage level of the internal circuit of the solenoid valve control device 13 and outputs the signal to the microcomputer 133. The microcomputer 133 inputs the signal and outputs the control signal Ssv, which corresponds to the opening and closing, or the energizing and de-energizing of the solenoid valve 12, to the IPD 134 from the output port Psv. The IPD 134 controls the energized condition of the battery voltage +Vb (for example, +12Vdc) based on the control signal Ssv input from the output port Psv in the microcomputer 133, and controls the opening and closing, or the energizing and de-energizing of the solenoid valve 12. The microcomputer 133 counts the number of operations, such as the number of times of opening, the number of times of closing, and the number of times of energizing, and outputs the data to the EEPROM 136. The EEPROM 136 stores the number of operations.

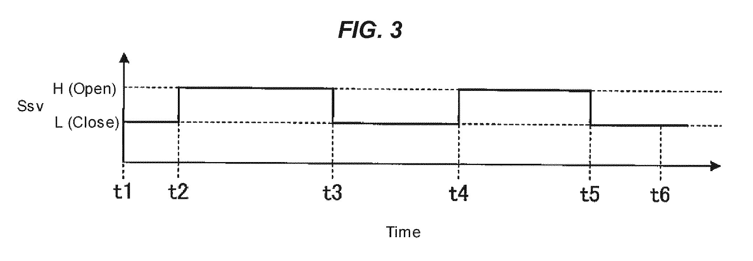

Fig. 3 illustrates an example of the control signal output from the microcomputer 133 in the solenoid valve control device 13 illustrated in Fig. 2, in time series. Particularly, when the solenoid valve 12 is the normal close type, an example of the control signal Ssv controlling the energized state of the battery voltage +Vb is illustrated. The battery voltage +Vb is output from the output port Psv in the microcomputer 133 based on the LIN communication signal indicating the opening and closing of the solenoid valve 12, and then applied to the coil 121 of the solenoid valve 12. The LIN communication signal is receive from the ECU for air conditioning system 3 by the solenoid valve control device 13.

In the example, when the microcomputer 133 sets 1 on the output port Psv based on the LIN communication signal, the control signal Ssv of the solenoid valve 12 output from the output port Psv becomes H (High). The IPD134 inputting the control signal Ssv makes the switching element, for example, MOSFET, or the like, to be ON and applies the battery voltage to the solenoid valve 12, so that the solenoid valve 12 becomes an energized state and opens. On the other hand, when the microcomputer 133 sets 0 on the output port Psv based on the LIN communication signal, the control signal Ssv of the solenoid valve 12 output from the output port Psv becomes L (Low). The IPD134 inputting the control signal Ssv makes the switching element, for example, MOSFET, or the like, to be OFF and does not apply the battery voltage to the solenoid valve 12, so that the solenoid valve 12 becomes a de-energized state and closes.

As illustrated in Fig. 3, in the time ranges of, for example, t1 to t2, t3 to t4, and t5 to t6, the microcomputer 133 receives the LIN communication signal indicating the closing of the solenoid valve 12 from the ECU for air conditioning system 3. The microcomputer 133 sets the output port Psv to be 0, and the control signal Ssv of the solenoid valve 12, which is output from the output port Psv, becomes L. At this time, the IPD 134 makes the switching element to be OFF and does not apply the battery voltage to the solenoid valve 12, so that the solenoid valve 12 becomes the de-energized state and closes. On the other hand, in the time ranges of t2 to t3 and t4 to t5, the microcomputer 133 receives the LIN communication signal indicating the opening of the solenoid valve 12 from the ECU for air conditioning system 3. The microcomputer 133 sets the output port Psv to be 1, and the control signal Ssv of the solenoid valve 12, which is output from the output port Psv, becomes H. At this time, the IPD 134 makes the switching element to be ON and applies the battery voltage to the solenoid valve 12, so that the solenoid valve 12 becomes the energized state and opens.

In addition, when IPD 134 applies the battery voltage and makes to be the energized condition in the time range of, for example, t2 to t3 and t4 to t5, there is a case that temperature rise becomes a problem. In such a case, the microcomputer 133 controls the ON/OF operation of the switching element, such as MOSFET in the IPD 134, and controls the battery voltage applying to the solenoid valve 12 and decreases the current flowing to the coil 121 of the solenoid valve 12. By this operation, the temperature rise can be inhibited.

Further, as described above, when the solenoid valve 12 is a normal open type, the solenoid valve 12 closes in the energized state and opens in the de-energized state. Further, the LIN communication signal received from the ECU for air conditioning system 3 by the solenoid valve control device 13, can be a signal indicating the energizing or de-energizing of the solenoid valve 12.

Then, the microcomputer 133 in the solenoid valve control device 13 counts the number of operations. The number of operations are, for example, in the time range t1 to t6 illustrated in Fig. 3, the number of times of opening (for example, 2 times), the number of times of closing (for example, 3 times), the number of times of energizing (for example, 2 times) of the solenoid valve 12, and the like. Then the microcomputer 133 outputs these data to the EEPROM 136. The EEPROM 136 stores the number of operations of the solenoid valve 12 output from the microcomputer 133.

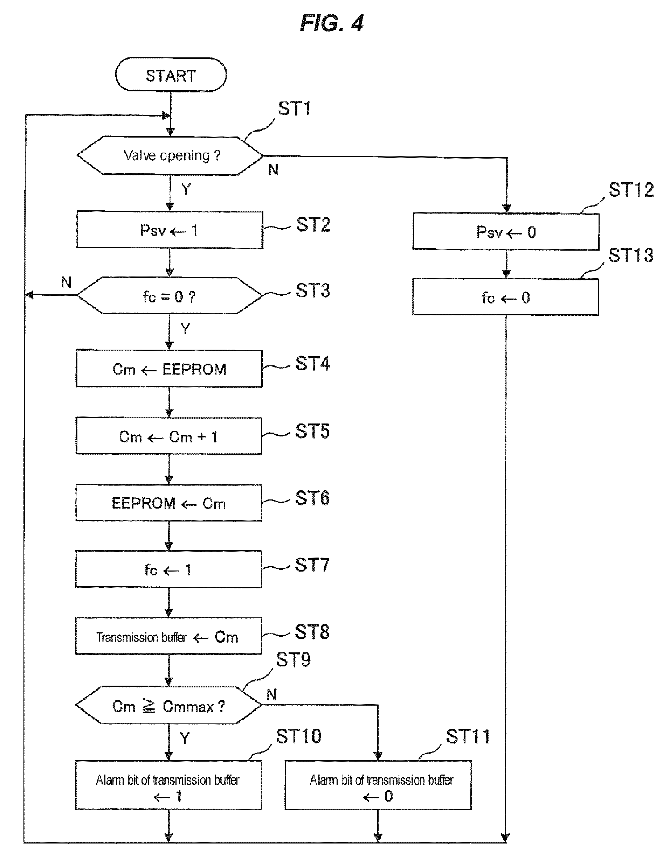

Fig. 4 is a flow chart explaining a processing flow of the microcomputer in the solenoid valve control device 13 illustrated in Fig. 2. Particularly, when the solenoid valve 12 is the normal close type, the flow chart explains control processing flow of the opening and closing of the solenoid valve 12 by the microcomputer 133 in the solenoid valve control device 13.

At first, in step ST 1, the microcomputer 133 determines whether the periodical LIN communication signal (for example, at every 200 msec) received from the ECU for air conditioning system 3 is the signal indicating the opening of the solenoid valve 12. When the microcomputer 133 determines that the periodical LIN communication signal is the signal indicating the opening of the solenoid valve 12, the processing proceeds to step ST 2.

Then, in step ST 2, the microcomputer 133 sets the output port Psv to be 1 and makes the control signal Ssv of the solenoid valve 12 to be H. Then, the microcomputer 133 makes the switching element, for example, MOSFET, or the like, in the IPD 134 to be ON and applies the battery voltage to the solenoid valve 12. The microcomputer 133 energizes in the solenoid valve 12 and opens the solenoid valve 12.

Then, in step ST 3, the microcomputer 133 determines whether a count flag fc is 0. Here, the count flag fc is the flag indicating the count of number of operations of the solenoid valve 12. When the count flag fc is 0, the operations of the solenoid valve 12 (opening operation) are not counted. When the count flag fc is 1, the operations of the solenoid valve 12 are already counted and the initial value of the count flag fc is 0. When the microcomputer does not count the operations of the solenoid valve 12 in step ST 2, that is, the count flag fc is 0 which is the initial value, the processing proceeds to step ST 4. In addition, when the microcomputer already counts the operations of the solenoid valve 12 in step ST 2, that is, the count flag fc is 1, the processing returns to ST 1. By this processing, the microcomputer 133 inhibits to count again the number of operations of the solenoid valve 12 in step ST 2, in which the microcomputer 133 already counts.

Then, in step ST 4, the microcomputer 133 reads a number of operations counter Cm stored in the EEPROM 133. In step ST 5, the microcomputer 133 adds 1 to the number of operations counter Cm on the RAM (for example, when the operation of the solenoid valve 12 is the first, the number of operations counter Cm is 1). In step ST 6, the microcomputer 133 writes a new number of operations counter Cm on the RAM in the EEPROM 136 again and stores. By this processing, the solenoid valve control device 13 can store the number of operations of the solenoid valve 12, which affects the durability. Further, the microcomputer 133 stores the number of operations of the solenoid valve 12 stores in the EEPROM 136, which is the non-volatile memory. Thus, even when the microcomputer 133 enters in the sleep mode for making the solenoid valve control device 13 to be in a power-saving state, the microcomputer 133 can reliably store the number of operations of the solenoid valve 12. In addition to this, even when the microcomputer 133 does not operate by cutting off the power supply +Vc, the microcomputer 136 can reliably store the number of operations of the solenoid valve 12. Furthermore, even when the battery power supply +Vb of the solenoid valve control device 13 is cut off, the microcomputer 133 can reliably store the number of operations of the solenoid valve 12.

Then, in step ST 8, since the microcomputer has counted the number of operations by the opening operation of the solenoid valve 12, the microcomputer sets the count flag fc to be 1.

Then, in step ST 8, in order to transmit the number of operations of the solenoid valve 12 counted in step ST 5 from the microcomputer 133 to, for example, the ECU for air conditioning system 3, the microcomputer 133 sets the number of operations counter Cm on the RAM in a transmission buffer resistor for the LIN communication. The transmission buffer resister is on the RAM similar to the number of operations counter Cm. When the microcomputer 133 receives, for example, a transmission requirement signal from the ECU for air conditioning system 3 by the LIN communication via the LIN bus 1, the microcomputer 133 transmits the content of the transmission buffer resistor to the ECU for air conditioning system 3 via the LIN bus 1 as the LIN communication signal. By this processing, the external ECU operating as a master node, which receives the content of the transmission buffer resistor, can grasp the number of operations of the solenoid valve 12. Thus, at a time of a periodic maintenance service of a vehicle, such as an inspection of six months, an inspection of twelve months, a vehicle inspection, or the like, a user, such as a vehicle maintenance person, a driver, or the like, can confirms the number of operations of the solenoid valve 12 via a display device 4. The display device 4 is, for example, a display screen or a display lamp of the testing equipment connected to the vehicle, a navigation screen of the vehicle, a lamp on a control panel, or the like. Thus, the user, or the like, can perform judgment of replacement of the solenoid valve 12, before the number of operations of the solenoid valve 12 becomes equal to or greater than the limitation number of times concerning the life of the solenoid valve 12. In addition, the limitation number of times of the solenoid valve 12 concerning the life of the solenoid valve 12 can be previously stored in, for example, the microcomputer 133, or the like. Further, the limitation number of times of the solenoid valve 12 can be stored after calculating by the microcomputer 133, or the like, according to the usage environment of the vehicle, in which the air conditioning system 100 is mounted. Furthermore, the user himself can arbitrarily set the limitation number of times of the solenoid valve 12.

Then, in step ST 9, the microcomputer 133 determines whether the number of operations counter Cm on the RAM in the microcomputer 133 is equal to or greater than the limitation number of times concerning the life of the solenoid valve 12 (hereinafter, referred to as the number of operations limitation value) Cmmax (for example, 100, 000 times).

Then, when the microcomputer 133 determines that the number of operations counter Cm is equal to or greater than the number of operations limitation value Cmmax, the microcomputer 133 determines that the number of operations of the solenoid valve 12 is equal to or greater than the number of operations acceptable on the durability of the solenoid valve 12. Then, the processing proceeds to step ST 10 and the microcomputer 133 sets an alarm bit to be 1. When the microcomputer 133 receives, for example, the transmission requirement signal from the ECU for air conditioning system 3 by the LIN communication via the LIN bus 1, the microcomputer 133 transmits the content of the transmission buffer resistor to the ECU for air conditioning system 3 via the LIN bus 1 as the LIN communication signal. At this time, when the alarm bit of the transmission buffer resistor is 1, the external ECU operating as the master node can grasp that the number of operations of the solenoid valve 12 is equal to or greater than the number of operations acceptable on the durability of the solenoid valve 12. By this processing, the external ECU transmits the alarm signal indicating the message, that the solenoid valve is at the time to replace, to the display equipment 4 at a time of, for example, a periodic maintenance service. The display equipment 4 is, for example, a display screen or a display lamp of the testing equipment connected to the vehicle, a navigation screen of the vehicle, a lamp on a control panel, or the like. The external ECU promotes the necessity of the maintenance of the solenoid valve to a user such as a vehicle maintenance person, a driver, or the like, via the display devices 4. Thus, the user can promptly replace the solenoid valve 12, which is equal to or greater than the number of operations acceptable on the durability, to a new solenoid valve. In addition, when the number of operations counter Cm is not equal to or greater than the number of operations limitation value Cmmax, the microcomputer 133 determines that the solenoid valve 12 is in a normal state and the processing proceeds to step ST 11. Then, the microcomputer 133 clears the alarm bit of the transmission buffer resistor to be 0.

In step S 11, when the LIN communication signal received from the ECU for air conditioning system 3 is the signal indicating the opening of the solenoid valve 12, the microcomputer 133 in the solenoid valve control device 13 repeats these processing. By repeating these processing, the microcomputer 133 in the solenoid valve control device 13 can preciously count the number of operations, which affects the durability of the solenoid valve 12, and store them.

On the other hand, in step ST 1, the microcomputer 133 determines whether the periodic LIN communication signal received from the ECU for air conditioning system 3 is the signal indicating the opening of the solenoid valve 12. When the microcomputer determines that the LIN communication signal is the signal indicating the closing of the solenoid valve 12, the processing proceeds to step ST 12.

In step ST 12, the microcomputer 133 sets the output port Psv to be 0 and makes the control signal Ssv of the solenoid valve 12 to be L. Further, the microcomputer 133 makes the switching element of the IPD 134, for example, MOSFET, or the like, to be OFF and does not apply the battery voltage to the solenoid valve 12, so that the solenoid valve 12 becomes de-energized state and closes. Then, in step ST 13, the microcomputer 133 clears the count flag fc to be 0 and ends the processing.

In addition, after the microcomputer 133 clears the count flag fc to be 0, in step ST 1, the microcomputer 133 determines whether the LIN communication signal received from ECU for air conditioning system 3 is the signal indicating the opening of the solenoid valve 12. When the microcomputer 133 determines that the LNI communication signal is the signal indicating the opening of the solenoid valve 12, the processing proceeds to step 2, and the solenoid valve control device 13 counts the number of operations of the solenoid valve 12 and stores them.

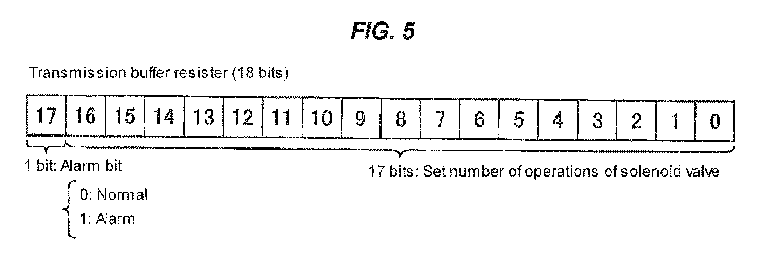

Fig. 5 is illustrates an example of the above transmission buffer resistor.

For example, when the number of operations limitation value of the number of operations of the solenoid valve 12 is 100,000 times, the buffer resistor, which sets the number of operations counter Cm of the solenoid valve 12, is set to be 17 bits. By using this buffer resistor, it is possible to transmit by writing until 131,071 times the maximum. Further, the alarm bit of the buffer resistor is set to be 1 bit and the number of operations limitation value Cmmax of the solenoid valve 12 is set to be 100,000 times. When the number of operations of the solenoid valve 12 is less than 100,000 times, 0 which indicates normal is set in the alarm bit of the buffer resistor. When the number of operations of the solenoid valve 12 is equal to or greater than 100,000 times, 1 which indicates alarm is set in the alarm bit of the buffer resistor. That is, when the number of operations limitation value Cmmax of the solenoid valve 12 is 100,000 times, the transmission buffer resistor is composed of, for example, 18 bits as illustrated in Fig. 5.

In addition, the air conditioning system (for example, car air conditioner) 100 of the present exemplary embodiment, includes the front air conditioner 10, the rear air conditioner 20, and the battery air conditioner 30, as illustrated in Fig. 1. Each air conditioner uses the solenoid valve 12, the solenoid valve 22, and the solenoid valve 32. Thus, the following settings can be done independently to the solenoid valve 12, the solenoid valve 22, and the solenoid valve 32. That is, to the solenoid valve 12, for example, the output port Psv of the microcomputer 133 is set as Psv 1, the control signal Ssv of the solenoid valve 12 is set as Ssv 1, the count flag Fc is set as fc 1, the number of operations counter Cm is set as Cm 1, the transmission buffer resistor is set as a transmission resistor 1, the number of operations limitation value Cmmax is set as Cmmax 1, and the alarm bit of the transmission buffer resistor is set as a alarm bit 1. To the solenoid valve 22, for example, the output port Psv of the microcomputer 133 is set as Psv 2, the control signal Ssv of the solenoid valve 22 is set as Ssv 2, the count flag fc is set as fc 2, the number of operations counter Cm is set as Cm 2, the transmission buffer resistor is set as a transmission resistor 2, the number of operations limitation value Cmmax is set as Cmmax 2, and the alarm bit of the transmission buffer resistor is an alarm bit 2. To the solenoid valve 32, for example, the output port Psv of the microcomputer 133 is set as Psv 3, the control signal Ssv of the solenoid valve 32 is set as Ssv 3, the count flag fc is set as fc 3, the number of operations counter Cm is set as Cm 3, the transmission buffer resistor is set as a transmission resistor 3, the number of operations limitation value Cmmax is set as Cmmax 3, and the alarm bit of the transmission buffer resistor is an alarm bit 3.

Further, the number of bits of the above transmission buffer resister and its alarm bit can be changed arbitrarily and may be indicated by which 0 of the alarm bit is alarm and 1 of the alarm bit is normal.

Further, in the above exemplary embodiment, the following constitutions are described. That is, when the control signal Ssv of the solenoid valve becomes H (high), the switching element of the IPD, for example, MOSFET, or the like, becomes ON and the battery voltage is applied to the solenoid valve to be energized in the solenoid valve. When the control signal Ssv of the solenoid valve becomes L (Low), the switching element of the IPD, for example, MOSFET, or the like, becomes OFF and the battery voltage is not applied to the solenoid valve to be de-energized in the solenoid valve. However, the following constitutions may be acceptable. For example, when the control signal Ssv in the solenoid valve becomes L, the switching element becomes ON and the battery voltage is applied to the solenoid valve to be energized. When the control signal Ssv in the solenoid valve becomes H, the switching element becomes OFF and the battery voltage is not applied to the solenoid valve to be de-energized.

Further, in the above exemplary embodiment, the following constitution is described. For example, the microcomputer 133 in the solenoid valve device 11 transmits the number of operations of the solenoid valve 12 to the ECU for air conditioning system 3 via the LIN bus 1 and then, transmits from the ECU for air conditioning system 3 to the display equipment 4 via CAN bus 2. However, the microcomputer 133 may transmit the number of operations of the solenoid valve 12 to an ECU other than the ECU for air conditioning system 3 via LIN bus 1 and then, transmit from the ECU to the display equipment 4. Further, for example, the display equipment 4 connects the LIN bus 1 and the microcomputer 133 can directly transmit the number of operations of the solenoid valve 12 ton the display equipment 4 via the LIN bus 1.

Further, in the above exemplary embodiment, the following constitution is described. That is, the microcomputer 133 stores mainly the number of operations of the opening operation of the solenoid valve as the number of operations concerning the opening and closing of the solenoid valve. However, for example, the number of closing of the solenoid valve or the number of energizing to the solenoid valve may be the number of operations concerning the opening/closing of the solenoid valve. Further, the arbitrary combination number of times of the opening, closing, and energizing of the solenoid valve may be the number of operations concerning the opening/closing of the solenoid valve.

Furthermore, in the above exemplary embodiment, the case that the limitation number of times concerning the life of the solenoid valve for generating the alarm signal is the number of operations acceptable on the durability of the solenoid valve (for example, 100,000 times), is described. However, for example, the maximum number of operations of the solenoid valve writable in the transmission buffer resistor for transmitting the number of operations of the solenoid valve (for example, 131,071 times), may be the limitation number of times concerning the life of the solenoid valve. Further, the maximum number of operations of the solenoid valve storable in the EEPROM, which is a storage unit, may be the limitation number of times concerning the life of the solenoid valve. Further, for example, a first limitation number of times concerning the life of the solenoid valve and a second limitation number of times concerning the life of the solenoid valve may be set. The first limitation number of times is the number of operations acceptable on the durability of the solenoid valve (for example, 100,000 times). The second limitation number of times is the maximum number of operations of the solenoid valve writable in the transmission buffer resistor for transmitting the number of operations of the solenoid valve (for example, 131,071 times), or the maximum number of operations of the solenoid valve storable in the EEPROM. Taking this constitution, the user, or the like, such as a maintenance person of a vehicle, a driver, or the like, can be encouraged reliably in the necessity of the maintenance of the vehicle.

Further, in the above exemplary embodiment, the embodiment, in which the IPD internally having the switching element such as MOSFET, or the like, is used as a device driving the solenoid valve, is described. However, for example, a single MOSFET may be used as the device driving the solenoid valve. Further, for example, a bipolar transistor, an insulated gate bipolar transistor (IGBT), a relay, and a solid state relay (SSR) may be used as the device driving the solenoid valve.

## Claims

1. A solenoid valve control device controlling a solenoid valve, comprising;
a storage unit storing a number of operations concerning opening/closing of the solenoid valve, and
a transmission unit externally transmitting the number of operations stored in the storage unit.

2. The solenoid valve control device according to claim 1,
wherein, when the number of operations stored in the storage unit becomes equal to or greater than the limitation number of times concerning a life of a solenoid valve, the transmission unit externally transmits an alarm signal.

3. The solenoid valve control device according to claim 2,
wherein the limitation number of times is the number of operations acceptable on durability of the solenoid valve.

4. The solenoid valve control device according to any one of claim 1 to claim 3,
wherein the number of operations is any one of the number of times of opening, the number of times of closing, and the number of times of energizing of the solenoid valve.

5. The solenoid valve control device according to any one of claim 1 to claim 4,
wherein the transmission unit externally transmit by LIN communication or CAN communication.

6. The solenoid valve control device according to any one of claim 1 to claim 5,
wherein the storage unit is a non-volatile memory.
